# EUROPEAN PATENT SPECIFICATION

(11) **EP 4 136 346 B1**
(45) Date of publication and mention of the grant of the patent: **19.02.2025**
(21) Application number: 21722208.2
(22) Date of filing: 29.04.2021
(51) Int. Cl.: F03D 13/20, F03D 80/80

(54) **ADAPTABLE TOWER PLATFORM ARRANGEMENT**
ANPASSBARE ANORDNUNG EINER TURMPLATTFORM
AGENCEMENT DE PLATE-FORME DE TOUR ADAPTABLE

(30) Priority: 27.05.2020 EP 20382448
(43) Date of publication of application: 22.02.2023
(73) Proprietor: Siemens Gamesa Renewable Energy Innovation & Technology S.L., 31621 Sarriguren (Navarra) (ES)
(72) Inventor: AHRENS, Jan-Hinrich, 22529 Hamburg (DE); BRAUER, Jonas, 23898 Sandesneben (DE); GODHUSEN, Timo, 21502 Geesthacht (DE); IRIARTE LIZARRAGA, Miren, 31005 Pamplona (ES); IRISARRI MARTIARENA, Asier, 3006 Pamplona (ES); WERNER, Patrick, 22041 Hamburg (DE)
(74) Representative: SGRE-Association
(86) International application number: PCT/EP2021/061221
(87) International publication number: WO 2021/239381

(56) References cited:
- WO-A2-2014/070084
- US-A1- 2009 031 668

## Description

The invention describes an adaptable tower platform arrangement, a tower equipped with such an adaptable tower platform arrangement, and a method of providing access to a tower interior level.

### Background

A tall wind turbine tower is generally constructed to include a gradually tapering tower section, so that the diameter at the upper tower level (at the yaw interface) is significantly smaller than the diameter at a lower tower level.

Access to different levels inside a tower is required for various reasons, for example to carry out maintenance procedures in the tower, or to provide access to the nacelle. To fulfil safety requirements, a platform should extend to essentially completely seal the circular area at the platform level. Since there are many wind turbine tower designs with widely varying geometries, it is usual practice to design interior platforms to match the requirements of a specific tower design. Platforms designed for use with one tower type generally cannot be used for a different tower type. The access platforms therefore add significantly to the overall cost of a wind turbine.

In one approach to avoiding such costs, a basic platform design may be considered for installation at a higher (narrower) tower level, and an added perimeter of a flexible material can be arranged about this basic platform when installed at a lower (wider) tower level. A drawback of this approach is that the added perimeter may not be effective in preventing objects or people from falling off the platform. In another approach, a basic platform may be augmented by a rigid railing or kickplate which is more effective at preventing objects from falling off the platform. However, such adaptations are expensive and may not always comply with strict safety requirements.

An example of a prior art adaptable tower platform arrangement is disclosed in US 2009/031668 A1.

It is therefore an object of the invention to provide an improved way of providing access to various levels in a tower interior.

This object is achieved by the adaptable tower platform arrangement of claim 1; by the tower of claim 10; and by the method of claim 15 of providing access to a tower interior level.

The inventive adaptable tower platform arrangement is intended for use in the interior of a tower that has at least one frustoconical section, i.e. the tower tapers from a wider diameter at the base of the frustoconical section to a narrower diameter at the top of the frustoconical section.

According to the invention, the adaptable tower platform arrangement is constituted as stipulated by appended claim 1.

The inventive adaptable tower platform arrangement can comprise a set of components, i.e. at least one platform and several adapter rings. An advantage of the inventive adaptable tower platform arrangement is that only a single type of platform is needed, i.e. the platform can be mounted to any one of the adapter rings. Because the adapter rings can all have different outer diameters, each adapter ring will fit at a specific level inside a frustoconical tower section. According to the invention multiple platforms are part of a set, and the platforms are essentially identical (having at least the same diameter) i.e*.* any platform can be mounted to any one of the adapter rings. Of course, any adapter ring can be used inside a right cylindrical tower section with the corresponding interior diameter.

The inventive adaptable tower platform arrangement can therefore be significantly more economical than a solution requiring custom-made platforms for installing at various levels in one or more towers with different interior diameters. The installation time of a tower can also be shortened, since mounting of the platform assemblies at various tower levels is favourably straightforward.

According to the invention, the tower - for example a hollow wind turbine tower - comprises a plurality of platform assemblies installed at different levels in the tower interior. Each platform assembly comprises an instance of the circular platform, mounted to an adapter ring with an outer diameter corresponding to the tower interior diameter at that level.

According to the invention, the method of providing access to a tower interior level using an embodiment of the inventive adaptable tower platform arrangement comprises the steps of determining the diameter at a tower interior level; preparing a platform assembly by selecting an adapter ring with an outer diameter that corresponds to the tower interior diameter at that level and mounting an instance of the platform to the selected adapter ring; and arranging the platform assembly at that tower interior level.

Particularly advantageous embodiments and features of the invention are given by the dependent claims, as revealed in the following description.

In the following, it may be assumed that the tower is a tall structure such as a wind turbine tower. It may also be assumed that the tower has at least one frustoconical tower section, i.e. the tower is frustoconical in shape over at least part of its height. The tower may also comprise one or more right cylindrical sections, i.e. tower sections with essentially constant diameter. Tower sections may be connected using flanges as will be known to the skilled person.

A platform can be constructed in any suitable manner. For example, a platform can be made a circular disc of a strong material such as steel. However, the interior diameter of a tower such as a wind turbine tower can comprise several metres, and a circular platform with such a diameter would be expensive and may lack structural stability. Therefore, in a preferred embodiment of the invention, a platform is constructed from a plurality of platform sections. Preferably, each section is essentially rectangular and has at least two straight edges. A platform section that extends to the perimeter will have a curved edge corresponding to an arc of the perimeter.

Adjacent platform sections are preferably joined in a robust manner, for example by welding and/or by means of fasteners. In a particularly preferred embodiment of the invention, any two platform sections are shaped so that their common edges have lateral extensions which are folded at right angles and joined together. Preferably, the edges are folded vertically downward, so that the upper platform surface remains flat. The joints formed by connecting these downwardly-folded edges act as stiffening structures for the platform. In this way, a robust and economical platform can be provided in a straightforward manner.

A platform of a platform assembly can be connected in any suitable manner to an adapter ring. In a preferred embodiment of the invention, an assembly interface comprises an annular overlap between an adapter ring inner diameter and the platform diameter. Preferably, the overlap between platform and adapter ring comprises at least 50 mm.

A platform assembly is preferably secured to the tower wall by means of a suitable installation interface. In a preferred embodiment of the invention, a platform can be adapted for connection to an installation interface provided as a set of brackets extending outward from the tower wall. For example, a platform assembly with an outer diameter in the order of 4 m may be supported by 10 brackets evenly distributed in an annular arrangement about the tower interior at that mounting level. The platform can be secured to the tower wall by brackets, magnets, direct fasteners or other similar solutions. For example, several brackets can be attached to the tower wall, or can be secured to a flange at the junction of two tower sections. The brackets can be fastened to the platform assembly, for example the brackets can be screwed or welded to the joints between platform sections. In such an embodiment, the positions of the brackets are determined by the platform section design.

Alternatively or in addition, a platform assembly may be suspended from points on the tower wall. For example, an installation interface can comprise an annular arrangement of appropriate wall fittings may be secured to the tower wall, and a corresponding number of cables, stays or rods that each extends between a wall fitting and an attachment fitting provided near the perimeter of the platform. For example, a platform assembly with an outer diameter in the order of 4 m may be suspended from eight, ten or more wall fittings evenly distributed in an annular arrangement about the tower interior.

In a preferred embodiment of the invention, the outer diameters of the adapter rings are chosen on the basis of a tower with interior diameters in the range of 3 m - 7 m. Of course, the invention can be used with smaller and/or larger tower diameters, and these values are only mentioned to give an indication of the dimensions of the tower type that may be equipped with the invention. To ensure a desired structural stability, the width of an adapter ring is preferably at least 100 mm. Since the platform diameter preferably exceeds the adapter ring inner diameter by the desired overlap amount, the platform diameter is essentially also derived from the smallest interior diameter of the tower, and is preferably at most 99% of the smallest tower interior diameter. The inner diameter of each adapter ring is determined by subtracting the preferred overlap width from the platform diameter.

As indicated above, the difference between the smallest and largest diameters of a hollow tower can vary widely, particularly in the case of towers that are assembled by stacking sections one on the other. In such realisations, the largest diameter of a lower tower section can be significantly greater that the largest diameter of another tower section. Therefore, in a preferred embodiment of the invention, access to various levels inside the tower is provided by using two or more instances of the inventive adaptable tower platform arrangement. Each adaptable platform arrangement covers a range of tower interior diameters. For example, a first adaptable platform arrangement is used in a lower region with the largest diameters; and a second adaptable platform arrangement is used in an upper tower region with a range of smaller diameters. The circular platform of the first instance can be larger than the outer diameter of the adapter ring of the largest platform assembly of the second instance. The interior of a wind turbine tower is usually utilized for various purposes. Power cables from the generator usually pass from the nacelle to the base of the tower, and enter the tower at the level of the yaw ring. Therefore, in a preferred embodiment of the invention, any platform assembly in the tower interior comprises an opening to permit the passage of power cables. Such an opening can be provided in the platform, for example by the omission of a rectangular platform section. Alternatively, an opening can be provided as a cut-out at the edge of the platform assembly, e.g**.** by omitting a section of the adapter ring.

It is generally also required to provide personnel access to various levels in the tower, for example to perform maintenance procedures on aviation lights on the tower, to perform maintenance procedures on the yaw system, etc. To this end, in a further preferred embodiment of the invention, any platform assembly in the tower interior comprises an access opening to accommodate a ladder and/or to accommodate an elevator.

Preferably, a platform assembly is constructed so that there are essentially no significant gaps in the surface comprising platform and adapter ring, to avoid the risk of tools or other objects from falling off the platform assembly. To this end, a hatch may be used to close off an access opening when not in use.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 illustrates the principle of the inventive adaptable platform arrangement;
Figure 2 shows an exemplary embodiment of a platform of the inventive adaptable platform arrangement;
Figure 3 shows a number of adapter rings of the inventive adaptable platform arrangement;
Figure 4 shows a cross-section through a platform assembly of the inventive adaptable platform arrangement installed in a tower;
Figure 5 shows a schematic cross-section through a wind turbine tower equipped with an embodiment of the inventive adaptable platform arrangement;
Figure 6 shows a further schematic cross-section through a wind turbine tower; and
Figure 7 shows yet another schematic cross-section through a wind turbine tower.

In the diagrams, like numbers refer to like objects throughout. Objects in the diagrams are not necessarily drawn to scale.

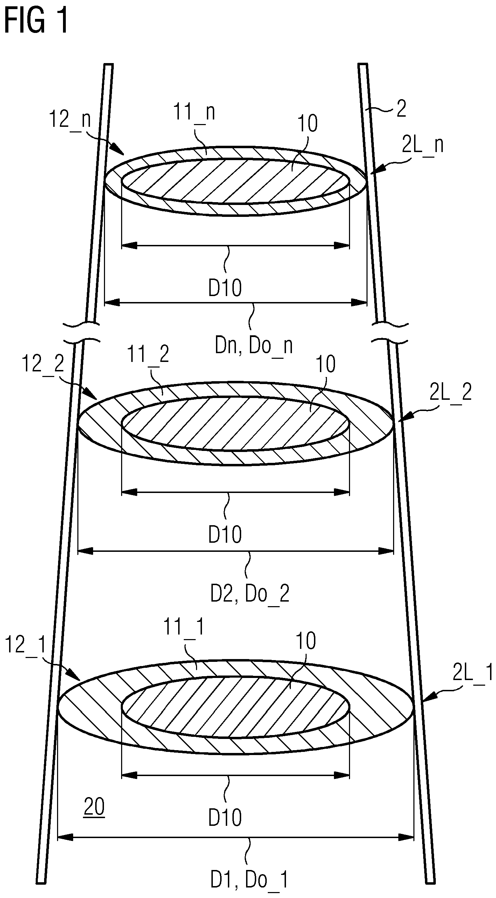

Figure 1 illustrates the principle of the inventive adaptable platform arrangement 1. For a tower 2 with gradually decreasing diameter and multiple desired access levels 2L_1, ..., 2L_n, the adaptable platform arrangement 1 comprises a single type of platform 10 and multiple adapter rings 11_1, ..., 11_n, each having an outer diameter Do_1, ..., Do_n that corresponds to the tower inner diameter D1, ..., Dn at that access level 2L_1, ..., 2L_n. A platform assembly 12_1, ..., 12_n is constructed by attaching an instance of the platform 10 to an adapter ring 11_1, ..., 11_n. The adapter ring 11_1, ..., 11_n is selected according to tower diameter at the level at which the platform assembly is to be installed.

The cost of equipping the tower 2 with multiple platform assemblies 12_1, ..., 12_n is favourably low, since the platform 10 is the same in each assembly 12_1, ..., 12_n, and only the adapter rings 11_1, ..., 11_n differ in dimension.

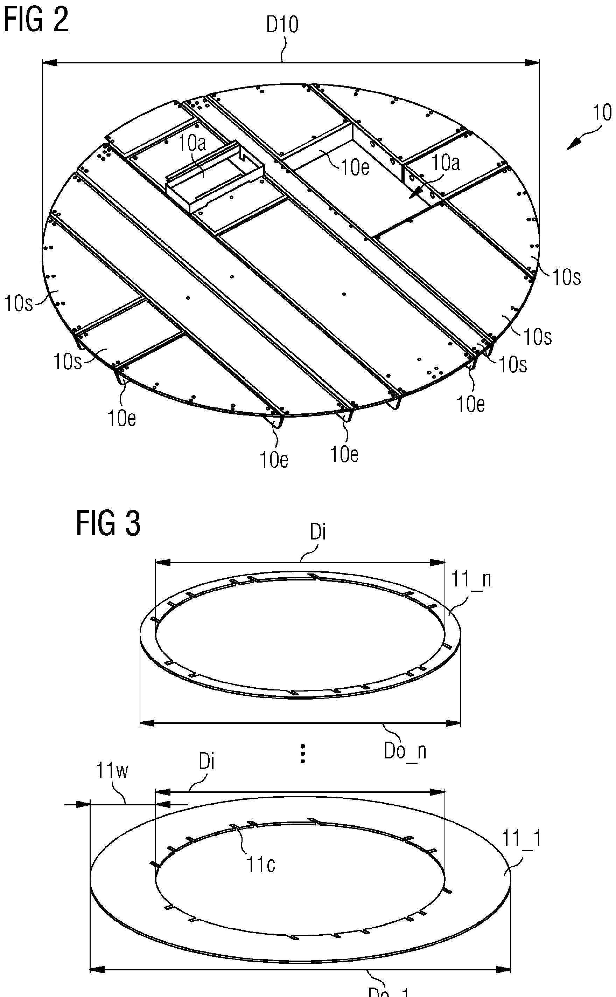

Figure 2 shows an exemplary embodiment of the platform 10. Here, the platform 10 is made by joining multiple platform sections 10s. Some sections 10s are rectangular, with adjacent sections 10s along their straight sides. Other sections 10s are based on a rectangular shape, with three straight sides and one curved edge at the perimeter of the platform 10. The overall shape of the platform 10 is circular with diameter D10.

The diagram also indicates the manner in which the platform sections 10s are joined. The surface of a section 10s extends beyond its straight sides, and these additional areas are bent downwards at right angles to form vertical planar extensions that serve as connecting faces 10e. Adjacent platform sections 10s are joined by welding or otherwise connecting their vertical planar connecting faces 10e. The resulting joint provides structural stiffness to the platform 10.

By omitting one or more platform sections, access openings 10a can be provided in the platform 10, for example to afford passage to a cable arrangement, to allow personnel access, to accommodate a ladder, to accommodate an elevator, etc. The downward-bent planar extensions 10e of the platform sections 10s enclosing the access opening 10a serve are shown in the diagram.

Figure 3 shows a number of adapter rings 11_1, ..., 11_n. The inner diameter Di is essentially the same for all adapter rings 11_1, ..., 11_n. The outer diameter Do_1, ..., Do_n is different for each adapter ring 11_1, ..., 11_n so that each adapter ring 11_1, ..., 11_n will fit at a different level in the interior of a frustoconical tower. The width 11w of an adapter ring 11_1, ..., 11_n can be in the order of 15 cm - 30 cm. The inner diameter Di is preferably at most 98% of the platform diameter D10, so that there is sufficient overlap when an instance of the platform 10 rests on an adapter ring 11_1, ..., 11_n. The diagram indicates that an adapter ring can be made of multiple segments, which can be connected by welding and/or by appropriate fasteners. Cut-outs 11c are provided at specific positions that correspond to the positions of the downward-bent extensions 10e of platform sections 10s shown in Figure 2.

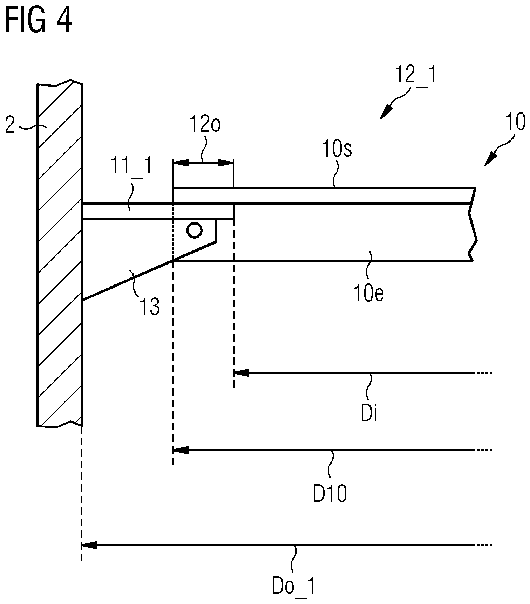

Figure 4 shows a cross-section through a platform assembly 12_1 installed in a tower 2. The diagram illustrates how the outer rim of the platform 10 rests on the upper surface of the adapter ring 11_1, which in turn can rest on or be bolted to a flange (not shown) between tower sections. A vertical downward-extending edge 10e of a platform section 10s is secured to a bracket 13 that is mounted to the tower wall. The adapter ring 11_1 is provided with a cut-out 11c as shown in Figure 3, which is shaped and positioned to fit about the vertical downward-extending edge 10e.

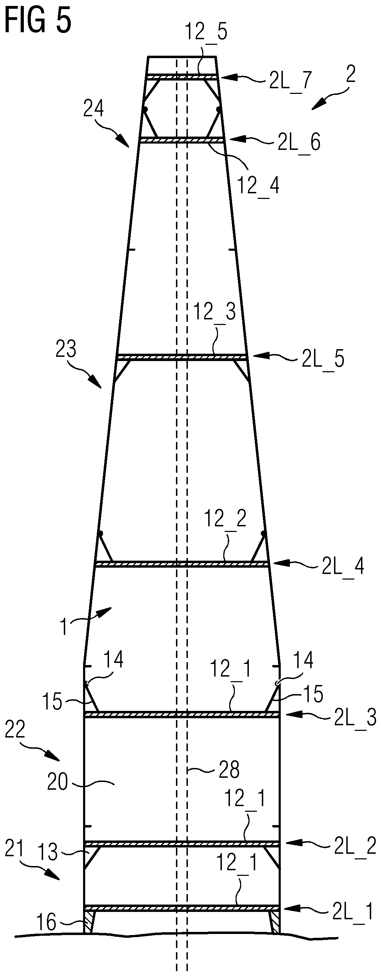

Figure 5 shows a schematic cross-section through a wind turbine tower 2. The tower 2 is equipped with an embodiment of the inventive adaptable platform arrangement 1, with a platform assembly 12_1, ..., 12_5 at each of multiple access levels 2L_1, ..., 2L_7. The tower 2 is constructed from two right cylindrical sections 21, 22 and two frustoconical sections 23, 24.

For the sake of clarity, the platform assemblies are shown in a very simplified manner, but it shall be understood that each platform assembly comprises a platform and an adapter ring as explained above.

Three essentially identical platform assemblies 12_1 are installed in the two lower tower sections 21, 22 at access levels 2L_1 - 21_3, i.e. each of these platform assemblies 12_1 uses an adapter ring with the same outer diameter. The lowest platform assembly 12_1 rests on a supporting structure 16 installed on the tower foundation and serves as a floor for personnel entering the tower 2; the next platform assembly 12_1 rests on support brackets 13 connected to a tower section flange 27; the next platform assembly 12_1 is suspended by stays 15 secured to suspension fittings 14 mounted to the tower wall.

In the next tower section 23, platform assemblies 12_2, 12_3 are installed at the next two access levels 2L_4, 2L_5, whereby the outer diameter of the adapter ring of the platform assembly 12_2 at access level 2L_4 is wider than the outer diameter of the adapter ring of the platform assembly 12_3 at access level 2L_5.

These platform assemblies 12_4, 12_5 can be installed as described above, for example suspended by stays 15 secured to suspension fittings 14 mounted to the tower wall, or resting on support brackets 13.

In the next tower section 24, platform assemblies 12_4, 12_5 are installed at the next two access levels 2L_6, 2L_7, whereby the outer diameter of the adapter ring 11_4 of the platform assembly 12_4 at access level 2L_6 is wider than the outer diameter of the adapter ring 11_5 of the platform assembly 12_5 at access level 2L_7.

These platform assemblies 12_6, 12_7 can be installed as described above, for example suspended by stays 15 secured to suspension fittings 14 mounted to the tower wall, or resting on support brackets 13.

The diagram also indicates a cable suspension arrangement 28, with power cables extending from the upper level of the tower 2 (from a generator in a nacelle) through openings in the platforms 10, so that the cables can reach the base of the tower 2. The tower 2 can also be equipped with an elevator that can pass through openings in the platforms 10, or various ladders that extend from one platform to the next.

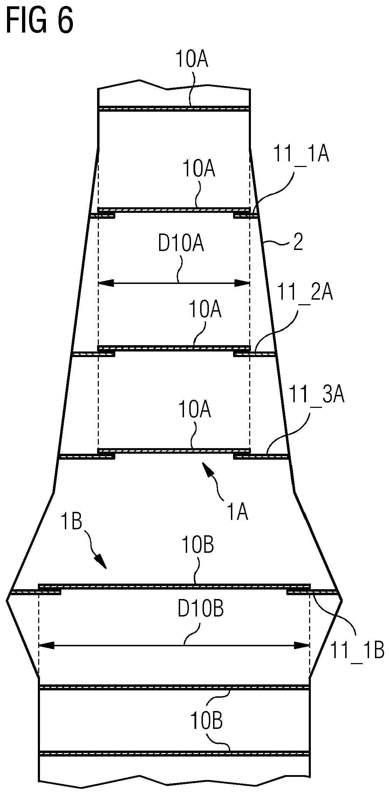

Figure 6 shows a further schematic cross-section through a wind turbine tower 2. The tower 2 is equipped with two instances of the inventive adaptable platform arrangement 1A, 1B.

With the upper platform arrangement 1A, four access levels are installed. The uppermost level uses simply the platform 10A of the adaptable arrangement 1A, and the other three levels use adapter rings 11_1A, 11_2A, 11_3A.

With the lower platform arrangement 1B, further access levels are provided. The uppermost level in this wider tower region uses a platform 10B of the adaptable arrangement 1B with an adapter rings 11_1B. The other two levels near the cylindrical base of the tower 2 simply use the platform 10B in each case.

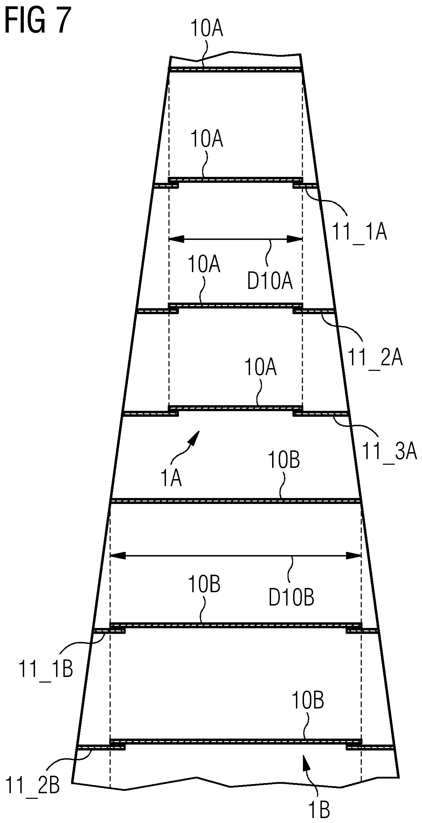

Figure 7 shows a further schematic cross-section through a wind turbine tower 2**.** In this case also, the tower 2 is equipped with two instances of the inventive adaptable platform arrangement 1A, 1B.

With the upper platform arrangement 1A, four access levels are installed. The uppermost level uses simply the platform 10A of the adaptable arrangement 1A, and the other three levels use adapter rings 11_1A, 11_2A, 11_3A.

With the lower platform arrangement 1B, further access levels are provided. The uppermost level in this wider tower region is provided by only the platform 10B of the adaptable arrangement 1B, and the other two levels use adapter rings 11_1B, 11_2B.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. An adaptable tower platform arrangement (1) for use in a tower interior (20), comprising
- circular platforms (10), each with an essentially identical platform diameter (D10);
- a plurality of annular adapter rings (11_1, ..., 11_n) each with essentially the same inner diameter (Di) and an outer diameter (Do_1, ..., Do_n), wherein
each outer diameter (Do_1, ..., Do_n) exceeds the platform diameter (D10) and corresponds to a different tower interior diameter (D1, ..., Dn); and
- an assembly interface configured to facilitate connection of a platform (10) to an adapter ring (11_1, ..., 11_n) to obtain a platform assembly (12_1, ..., 12_n) having the outer diameter of that adapter ring (11_1, ..., 11_n).

2. An adaptable tower platform arrangement according to claim 1, wherein the assembly interface comprises an annular overlap (12o) between an adapter ring inner diameter (Di) and the platform diameter (D10).

3. An adaptable tower platform arrangement according to any of the preceding claims, wherein a platform (10) is constructed from a plurality of platform sections (10s), wherein a platform section (10s) has at least two straight edges that meet at a right angle.

4. An adaptable tower platform arrangement according to claim 3, wherein a joint between any two adjacent platform sections (10s) is formed between downward folded extensions (10e) along the straight edges of the platform sections (10s).

5. An adaptable tower platform arrangement according to any of the preceding claims, wherein the outer diameters (Do_1, ..., Do_n) of the adapter rings (11_1, ..., 11_n) are chosen on the basis of a tower (2) for which the largest interior diameter is in the order of 7 m.

6. An adaptable tower platform arrangement according to any of the preceding claims, wherein the outer diameters (Do_1, ..., Do_n) of the adapter rings (11_1, ..., 11_n) are chosen on the basis of a tower (2) for which the smallest interior diameter is in the order of 3 m.

7. An adaptable tower platform arrangement according to any of the preceding claims, wherein the platform diameter (D10) is at most 99% of the smallest interior diameter of the tower (2).

8. An adaptable tower platform arrangement according to any of the preceding claims, comprising an installation interface (13, 14, 15, 16) for installing a platform assembly (12_1, ..., 12_n) at a level (2L_1, ..., 2L_n) in the tower interior (20).

9. An adaptable tower platform arrangement according to any of the preceding claims, wherein the installation interface comprises a number of stays (15) adapted to extend between the platform (10) and the tower wall.

10. A tower (2) equipped with an adaptable tower platform arrangement (1) according to any of claims 1 to 9, comprising a plurality of platform assemblies (12_1, ..., 12_n) installed at different levels (2L_1, ..., 2L_n) in the tower interior (20), wherein each platform assembly (12_1, ..., 12_n) comprises a circular platform (10) of the adaptable tower platform arrangement (1), mounted to an adapter ring (11_1, ..., 11_n) of the adaptable tower platform arrangement (1), with an outer diameter (Do_1, ..., Do_n) corresponding to the tower interior diameter at that level (2L_1, ..., 2L_n).

11. A tower according to claim 10, comprising at least one frustoconical tower section (23, 24), and two or more platform assemblies (12_2, ..., 12_5) installed at different levels (2L_4, ..., 2L_7) of that tower section (23, 24).

12. A tower according to any of claims 10 - 11, comprising at least one right circular tower section (21, 22), and two or more platform assemblies (12_1) installed at different levels (2L_1, ..., 2L_3) of that tower section (21, 22), each platform assembly (12_1) having the same adapter ring (11_1).

13. A tower according to any of claims 10 - 12, comprising an annular arrangement of supporting brackets (13) extending outward from the tower wall to receive a platform assembly (12_1, ..., 12_n).

14. A tower according to any of claims 10 - 13, wherein a platform (10) comprises an access opening (10a) to permit the passage of service personnel between different levels (2L_1, ..., 2L_n) in the tower interior (20) and/or an opening (10a) to permit the passage of power cables (28) between the uppermost level of the tower (2) to the base of the tower (2) and/or an access opening (10a) shaped to accommodate a elevator.

15. A method of providing access to a level (2L_1, ..., 2L_n) in a tower interior (20) using an adaptable tower platform arrangement (1) according to any of claims 1 to 9, which method comprises the steps of
- determining the tower interior diameter (D1, Dn) at a tower interior level (2L_1, ..., 2L_n);
- preparing a platform assembly (12_1, ..., 12_n) by selecting an adapter ring (11_1, ..., 11_n) with an outer diameter (Do_1, ..., Do_n) that corresponds to the tower interior diameter at that level (2L_1, ..., 2L_n) and mounting an instance of the platform (10) to the selected adapter ring (11_1, ..., 11_n); and
- arranging the platform assembly (12_1, ..., 12_n) at that tower interior level (2L_1, ..., 2L_n).

## Patentansprüche

1. Anpassbare Turmplattformanordnung (1) zur Verwendung in einem Turminneren (20), umfassend
- kreisförmige Plattformen (10) mit jeweils im Wesentlichen identischem Plattformdurchmesser (D10);
- eine Vielzahl von ringförmigen Adapterringen (11_1, ..., 11_n) mit jeweils im Wesentlichen demselben Innendurchmesser (Di) und einem Außendurchmesser (Do_1, ..., Do_n), wobei
jeder Außendurchmesser (Do_1, ..., Do_n) den Plattformdurchmesser (D10) überschreitet und einem anderen Turminnendurchmesser (D1, ..., Dn) entspricht; und
- eine Montageschnittstelle, die dazu ausgelegt ist, die Verbindung einer Plattform (10) mit einem Adapterring (11_1, ..., 11_n) zu ermöglichen, um eine Plattformbaugruppe (12_1, ..., 12_n) mit dem Außendurchmesser dieses Adapterrings (11_1, ..., 11_n) zu erhalten.

2. Anpassbare Turmplattformanordnung nach Anspruch 1, wobei die Montageschnittstelle eine ringförmige Überlappung (12o) zwischen einem Adapterring-Innendurchmesser (Di) und dem Plattformdurchmesser (D10) umfasst.

3. Anpassbare Turmplattformanordnung nach einem der vorhergehenden Ansprüche, wobei eine Plattform (10) aus einer Vielzahl von Plattformabschnitten (10s) konstruiert ist, wobei ein Plattformabschnitt (10s) mindestens zwei gerade Kanten aufweist, die sich unter einem rechten Winkel treffen.

4. Anpassbare Turmplattformanordnung nach Anspruch 3, wobei eine Verbindung zwischen beliebigen zwei benachbarten Plattformabschnitten (10s) zwischen nach unten geklappten Verlängerungen (10e) entlang der geraden Kanten der Plattformabschnitte (10s) gebildet ist.

5. Anpassbare Turmplattformanordnung nach einem der vorhergehenden Ansprüche, wobei die Außendurchmesser (Do_1, ..., Do_n) der Adapterringe (11_1, ..., 11_n) auf der Basis eines Turms (2) ausgewählt werden, für den der größte Innendurchmesser in der Größenordnung von 7 m liegt.

6. Anpassbare Turmplattformanordnung nach einem der vorhergehenden Ansprüche, wobei die Außendurchmesser (Do_1, ..., Do_n) der Adapterringe (11_1, ..., 11_n) auf der Basis eines Turms (2) ausgewählt werden, für den der kleinste Innendurchmesser in der Größenordnung von 3 m liegt.

7. Anpassbare Turmplattformanordnung nach einem der vorhergehenden Ansprüche, wobei der Plattformdurchmesser (D10) höchstens 99 % des kleinsten Innendurchmessers des Turms (2) beträgt.

8. Anpassbare Turmplattformanordnung nach einem der vorhergehenden Ansprüche, die eine Installationsschnittstelle (13, 14, 15, 16) zum Installieren einer Plattformbaugruppe (12_1, ..., 12_n) auf einer Ebene (2L_1, ..., 2L_n) in dem Turminneren (20) umfasst.

9. Anpassbare Turmplattformanordnung nach einem der vorhergehenden Ansprüche, wobei die Installationsschnittstelle eine Anzahl von Streben (15) umfasst, die dazu ausgelegt sind, sich zwischen der Plattform (10) und der Turmwand zu erstrecken.

10. Turm (2), der mit einer anpassbaren Turmplattformanordnung (1) nach einem der Ansprüche 1 bis 9 ausgestattet ist, umfassend eine Vielzahl von Plattformbaugruppen (12_1, ..., 12_n), die auf unterschiedlichen Ebenen (2L_1, ..., 2L_n) im Turminneren (20) installiert sind, wobei jede Plattformbaugruppe (12_1, ..., 12_n) eine kreisförmige Plattform (10) der anpassbaren Turmplattformanordnung (1) umfasst, die an einem Adapterring (11_1, ..., 11_n) der anpassbaren Turmplattformanordnung (1) montiert ist, mit einem Außendurchmesser (Do_1, ..., Do_n), der dem Innendurchmesser des Turms auf dieser Ebene (2L_1, ..., 2L_n) entspricht.

11. Turm nach Anspruch 10, umfassend mindestens einen kegelstumpfförmigen Turmabschnitt (23, 24) und zwei oder mehr Plattformbaugruppen (12_2, ..., 12_5), die auf unterschiedlichen Ebenen (2L_4, ..., 2L_7) dieses Turmabschnitts (23, 24) installiert sind.

12. Turm nach einem der Ansprüche 10 - 11, umfassend mindestens einen rechten kreisförmigen Turmabschnitt (21, 22) und zwei oder mehr Plattformbaugruppen (12_1), die auf unterschiedlichen Ebenen (2L_1, ..., 2L_3) dieses Turmabschnitts (21, 22) installiert sind, wobei jede Plattformbaugruppe (12_1) denselben Adapterring (11_1) aufweist.

13. Turm nach einem der Ansprüche 10 - 12, umfassend eine ringförmige Anordnung von Stützhaltern (13), die sich von der Turmwand nach außen erstrecken, um eine Plattformbaugruppe (12_1, ..., 12_n) aufzunehmen.

14. Turm nach einem der Ansprüche 10 - 13, wobei eine Plattform (10) eine Zugangsöffnung (10a), um den Durchgang von Wartungspersonal zwischen verschiedenen Ebenen (2L_1, ..., 2L_n) im Turminneren (20) zu ermöglichen, und/oder eine Öffnung (10a), um den Durchgang von Leistungskabeln (28) zwischen der obersten Ebene des Turms (2) zu der Basis des Turms (2) zu ermöglichen, und/oder eine Zugangsöffnung (10a), die zur Aufnahme eines Aufzugs geformt ist, umfasst.

15. Verfahren zum Bereitstellen von Zugang zu einer Ebene (2L_1, ..., 2L_n) in einem Turminneren (20) unter Verwendung einer anpassbaren Turmplattformanordnung (1) nach einem der Ansprüche 1 bis 9, wobei das Verfahren die folgenden Schritte umfasst:
- Bestimmen des Turminnendurchmessers (D1, Dn) auf einer Turminnenebene (2L_1, ..., 2L_n);
- Vorbereiten einer Plattformbaugruppe (12_1, ..., 12_n) durch Auswählen eines Adapterrings (11_1, ..., 11_n) mit einem Außendurchmesser (Do_1, ..., Do_n), der dem Turminnendurchmesser auf dieser Ebene (2L_1, ..., 2L_n) entspricht, und Montieren einer Instanz der Plattform (10) an dem ausgewählten Adapterring (11_1, ..., 11_n); und
- Anordnen der Plattformbaugruppe (12_1, ..., 12_n) auf dieser Turminnenebene (2L_1, ..., 2L_n).

## Revendications

1. Agencement de plate-forme de tour adaptable (1) destiné à être utilisé dans un intérieur de tour (20), comprenant
- des plates-formes circulaires (10), avec chacune un diamètre de plate-forme essentiellement identique (D10) ;
- une pluralité d'anneaux adaptateurs annulaires (11_1, ..., 11_n) ayant chacun essentiellement le même diamètre interne (Di) et un diamètre externe (Do_1, ..., Do_n), dans lequel chaque diamètre externe (Do_1, ..., Do_n) dépasse le diamètre de plate-forme (D10) et correspond à un diamètre d'intérieur de tour différent (D1, ..., Dn) ; et
- une interface d'assemblage configurée pour faciliter la liaison d'une plate-forme (10) à un anneau adaptateur (11_1, ..., 11_n) pour obtenir un assemblage de plate-forme (12_1, ..., 12_n) ayant le diamètre externe de cet anneau adaptateur (11_1, ..., 11_n).

2. Agencement de plate-forme de tour adaptable selon la revendication 1, dans lequel l'interface d'assemblage comprend un chevauchement annulaire (12o) entre un diamètre interne d'anneau adaptateur (Di) et le diamètre de plate-forme (D10).

3. Agencement de plate-forme de tour adaptable selon l'une quelconque des revendications précédentes, dans lequel une plate-forme (10) est construite à partir d'une pluralité de sections de plate-forme (10s), dans lequel une section de plate-forme (10s) a au moins deux bords rectilignes qui se croisent à angle droit.

4. Agencement de plate-forme de tour adaptable selon la revendication 3, dans lequel un joint entre deux sections quelconques de plate-forme adjacentes (10s) est formé entre des extensions pliées vers le bas (10e) le long des bords rectilignes des sections de plate-forme (10s).

5. Agencement de plate-forme de tour adaptable selon l'une quelconque des revendications précédentes, dans lequel les diamètres externes (Do_1, ..., Do_n) des anneaux adaptateurs (11_1, ..., 11_n) sont choisis sur la base d'une tour (2) pour laquelle le plus grand diamètre interne est de l'ordre de 7 m.

6. Agencement de plate-forme de tour adaptable selon l'une quelconque des revendications précédentes, dans lequel les diamètres externes (Do_1, ..., Do_n) des anneaux adaptateurs (11_1, ..., 11_n) sont choisis sur la base d'une tour (2) pour laquelle le diamètre interne le plus petit est de l'ordre de 3 m.

7. Agencement de plate-forme de tour adaptable selon l'une quelconque des revendications précédentes, dans lequel le diamètre de plate-forme (D10) est au maximum 99 % du diamètre interne le plus petit de la tour (2).

8. Agencement de plate-forme de tour adaptable selon l'une quelconque des revendications précédentes, comprenant une interface d'installation (13, 14, 15, 16) pour installer un assemblage de plate-forme (12_1, ..., 12_n) à un niveau (2L_1, ..., 2L_n) dans l'intérieur de tour (20).

9. Agencement de plate-forme de tour adaptable selon l'une quelconque des revendications précédentes, dans lequel l'interface d'installation comprend un nombre de supports (15) adaptés pour s'étendre entre la plate-forme (10) et la paroi de tour.

10. Tour (2) équipée d'un agencement de plate-forme de tour adaptable (1) selon l'une quelconque des revendications 1 à 9, comprenant une pluralité d'assemblages de plate-forme (12_1, ..., 12_n) installés à différents niveaux (2L_1, ..., 2L_n) dans l'intérieur de tour (20), dans laquelle chaque assemblage de plate-forme (12_1, ..., 12_n) comprend une plate-forme circulaire (10) de l'agencement de plate-forme de tour adaptable (1), monté sur un anneau adaptateur (11_1, ..., 11_n) de l'agencement de plate-forme de tour adaptable (1), avec un diamètre externe (Do_1, ..., Do_n) correspondant au diamètre d'intérieur de tour à ce niveau (2L_1, ..., 2L_n).

11. Tour selon la revendication 10, comprenant au moins une section de tour tronconique (23, 24), et deux ou plusieurs assemblages de plate-forme (12_2, ..., 12_5) installés à différents niveaux (2L_4, ..., 2L_7) de cette section de tour (23, 24).

12. Tour selon l'une quelconque des revendications 10 - 11, comprenant au moins une section de tour circulaire droite (21, 22), et deux ou plusieurs assemblages de plate-forme (12_1) installés à différents niveaux (2L_1, ..., 2L_3) de cette section de tour (21, 22), chaque assemblage de plate-forme (12_1) ayant le même anneau adaptateur (11_1).

13. Tour selon l'une quelconque des revendications 10 - 12, comprenant un agencement annulaire de consoles de support (13) s'étendant vers l'extérieur depuis la paroi de tour pour recevoir un assemblage de plate-forme (12_1, ..., 12_n).

14. Tour selon l'une quelconque des revendications 10 - 13, dans laquelle une plate-forme (10) comprend une ouverture d'accès (10a) pour permettre le passage de personnel de service entre différents niveaux (2L_1, ..., 2L_n) dans l'intérieur de tour (20) et/ou une ouverture (10a) pour permettre le passage de câbles d'alimentation (28) entre le niveau le plus élevé de la tour (2) à la base de la tour (2) et/ou une ouverture d'accès (10a) conçue pour loger un ascenseur.

15. Procédé pour fournir un accès à un niveau (2L_1, ..., 2L_n) dans un intérieur de tour (20) utilisant un agencement de plate-forme de tour adaptable (1) selon l'une quelconque des revendications 1 à 9, ledit procédé comprend les étapes de
- détermination du diamètre intérieur de tour (D1, Dn) à un niveau interne de tour (2L_1, ..., 2L_n) ;
- préparation d'un assemblage de plate-forme (12_1, ..., 12_n) en sélectionnant un anneau adaptateur (11_1, ..., 11_n) avec un diamètre externe (Do_1, ..., Do_n) qui correspond au diamètre intérieur de tour à ce niveau (2L_1, ..., 2L_n) et montage d'un exemple de la plate-forme (10) à l'anneau adaptateur sélectionné (11_1, ..., 11_n) ; et
- agencement de l'assemblage de plate-forme (12_1, ..., 12_n) à ce niveau d'intérieur de tour (2L_1, ..., 2L_n).
